# EUROPEAN PATENT SPECIFICATION

(11) **EP 1 857 716 B1**
(45) Date of publication and mention of the grant of the patent: **07.07.2010**
(21) Application number: 07106206.1
(22) Date of filing: 16.04.2007
(51) Int. Cl.: F16H 61/32

(54) **Transmission driving mechanism of internal combustion engine**
Übertragungsantriebsmechanismus eines Verbrennungsmotors
Mécanisme de commande de transmission d'un moteur à combustion interne

(30) Priority: 18.05.2006 JP 2006138387
(43) Date of publication of application: 21.11.2007
(73) Proprietor: HONDA MOTOR CO., LTD., Tokyo 107-8556 (JP)
(72) Inventor: Inui, Hiroatsu, Saitama 351-0193 (JP); Arai, Dai, Saitama 351-0193 (JP); Matsuo, Kenji, Saitama 351-0193 (JP)
(74) Representative: Rupp, Christian

(56) References cited:
- EP-A- 1 132 661
- DE-A1- 19 838 146
- US-B1- 6 453 762

## Description

The present invention relates to a transmission driving mechanism that shifts engine speed of an internal combustion engine provided with a transmission. The present invention also relates to the internal combustion engine provided with the transmission driving mechanism that shifts the speed of the transmission by an electric motor for a shift, according to the preamble of claim 1 and as it is disclosed in US 6453762B1.

A known internal combustion engine is mounted in an all terrain vehicle with a crankshaft directed in a longitudinal direction of the vehicle.
In a transmission driving mechanism, the drive of an electric motor for a shift protruded from the front of a crankcase is transmitted to the turning of a shift spindle via a speed reducing means, the turning of the shift spindle turns a shift drum, moves a shift fork, the engagement of speed change gears in the transmission is changed, and a shift is executed.

A turning angle sensing means is attached to a front end of the shift spindle, the base of an arm is fitted onto its rear end, and an arm of a secondary spindle which is directed in a lateral horizontal direction perpendicular to the crankshaft and the left end of which is protruded on the side of the internal combustion engine is fitted to the end of the arm.

A hexagonal part is formed at the protruded left end of the secondary spindle, the secondary spindle is turned by fitting a wrench onto the hexagonal part and rocking the hexagonal part, the shift spindle is manually turned via a fitting part of the arm, and the speed of the transmission can be shifted.

The transmission driving mechanism depending upon the secondary spindle enables operating the transmission manually using a tool such as a wrench when a shift by the electric motor for the shift is not performed.

As described above, in the known transmission driving mechanism, as the transmission driving mechanism dedicated to manual operation using the secondary spindle is provided separately from the execution of a shift by the electric motor for the shift via the shift spindle and the transmission can be manually operated, a large number of parts are required, the structure is intricate, the assembly is troublesome, maintenance is required, and the cost is increased.

The invention is made in view of such a problem and the object is to provide a transmission driving mechanism of an internal combustion engine where a special transmission driving mechanism for manual operation is not required, the number of parts is reduced, the structure is simple, no maintenance is required and the cost can be reduced.

In order to achieve the above-mentioned object there is provided a transmission driving mechanism of an internal combustion engine including the features of claim 1.

According to the transmission driving mechanism of the internal combustion engine disclosed in Claim 2, as the turning angle sensing means is provided to the rear end of the shift rotating shaft and accessories of the internal combustion engine are arranged mainly in the rear of the body of the internal combustion engine, the turning area of the turning tool is easily secured in front of the internal combustion engine.
Besides, as the accessories are concentrated on the rear of the internal combustion engine, wiring is facilitated and the accessories can be protected from a scattering stone.

According to the transmission driving mechanism of the internal combustion engine disclosed in Claim 3, as the shift rotating shaft is arranged on the downside of the starting clutch provided to the front end of the crankshaft and the actuator for the shift is protruded forward in the lower part of the engine case cover covering the front of the starting clutch, the actuator for the shift and the shift rotating shaft are located mutually close and motive power can be easily and smoothly transmitted.
As the turning area of the turning tool is overlapped with the starting clutch on the side of the actuator for the shift of the engine case cover in the front view, the sufficient turning area of the turning tool can be easily secured without interfering with the actuator for the shift.

According to the transmission driving mechanism of the internal combustion engine disclosed in Claim 4, as the actuator for the shift is arranged on one side partitioned by a plane including the central axis of the starting clutch and the central axis of the shift rotating shaft, the shift clutch is arranged on the other side so that the shift clutch is partially overlapped with the starting clutch at the back of the starting clutch in the front view, the engine case cover also covers the front of the shift clutch together with the front of the starting clutch and the turning area of the turning tool is overlapped with the shift clutch in the front view, large space in front of the starting clutch and the shift clutch respectively having a large diameter can be used for the turning area of the turning tool, the turning tool is large-sized, and the operability can be enhanced.

According to the transmission driving mechanism of the internal combustion engine disclosed in Claim 5, as the shift rotating shaft is arranged next to the lower edge of the engine case cover, the turning tool can be extended long upward with the operating part fitted onto the shift rotating shaft located on the downside and the operability can be more enhanced.
Fig. 1 is a side view showing an all terrain vehicle mounting an internal combustion engine equivalent to one embodiment of the invention.
Fig. 2 is a front view showing the internal combustion engine.
Fig. 3 is a back view showing the internal combustion engine.
Fig. 4 is a front view in which a front crankcase half of the internal combustion engine and others are omitted.
Fig. 5 is a sectional view viewed along a line V-V in Fig. 4.
Fig. 6 is a sectional view viewed along a line VI-VI in Fig. 4.
Fig. 7 is a synthesized sectional view viewed along a line VII-VII and a line VII'-VII' in Fig. 4.

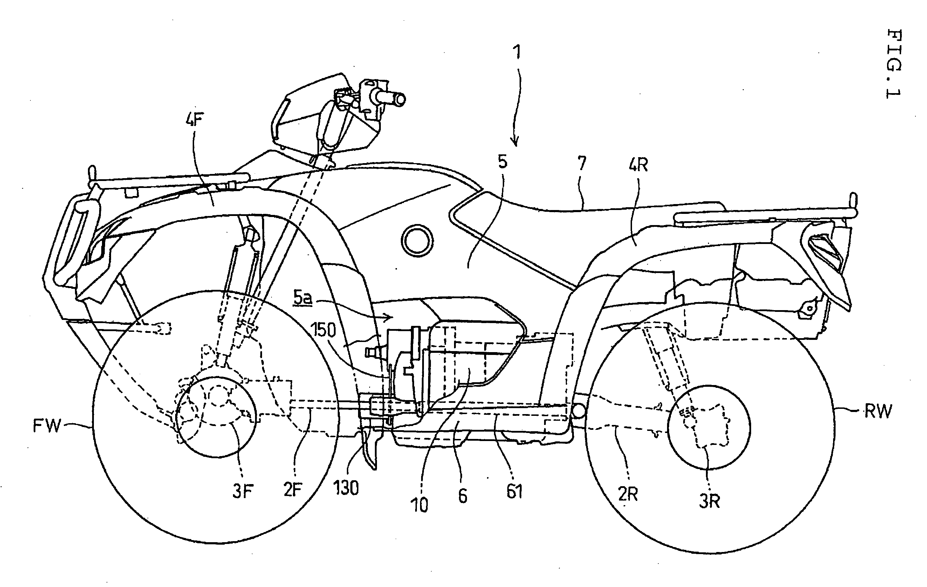

Referring to Figs. 1 to 5, one embodiment of the invention will be described below.
An internal combustion engine 10 equivalent to this embodiment is a water-cooled single-cylinder 4-stroke cycle internal combustion engine and is vertically mounted in an all terrain vehicle 1 with a crankshaft 11 longitudinally directed.
The front, the rear, the right and the left are determined in a direction in which the vehicle travels forward.

The all terrain vehicle 1 is a saddle-ride type four-wheel vehicle and a pair of right and left front wheels FW and a pair of right and left rear wheels RW respectively including a low pressure balloon tire for rough terrain are suspended in a longitudinal direction of a body frame 2.

The internal combustion engine 10 is mounted between the front wheel FW and the rear wheel RW, an output shaft 61 is longitudinally protruded from a transmission 40 located on the left side of the internal combustion engine 10, the rotational motive power of the output shaft 61 is transmitted to the right and left front wheels FW from a front end of the output shaft 61 via a front drive shaft 2F and a front final reduction gear unit 3F, and the rotational motive power is transmitted to the right and left rear wheels RW from a rear end of the output shaft via a rear drive shaft 2R and a rear final reduction gear unit 3R.

A front fender 4F covers the front wheel FW backward from the upside of the front wheel, a rear fender 4R covers the rear wheel RW forward from the upside of the rear wheel, a side cover 5 covers the right side and the left side of the internal combustion engine 10 mounted between the front wheel FW and the rear wheel RW, a step plate 6 is protruded outside from a lower edge of the side cover, and the step plate 6 is laid between the front fender 4F and the rear fender 4R.

A seat 7 is provided between the right and the left rear fenders 4R, 4R.
The front of the side cover 5 is cut off and an opening for access 5a is formed.
The opening for access 5a reaches a rear face of the front fender 4F and is located in a position in which the front of the internal combustion engine 10 is revealed.

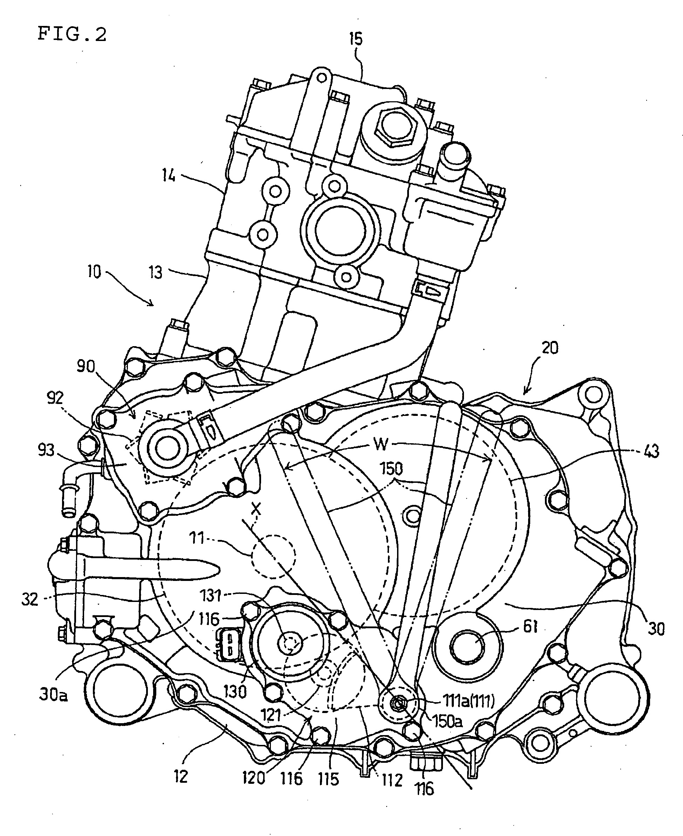

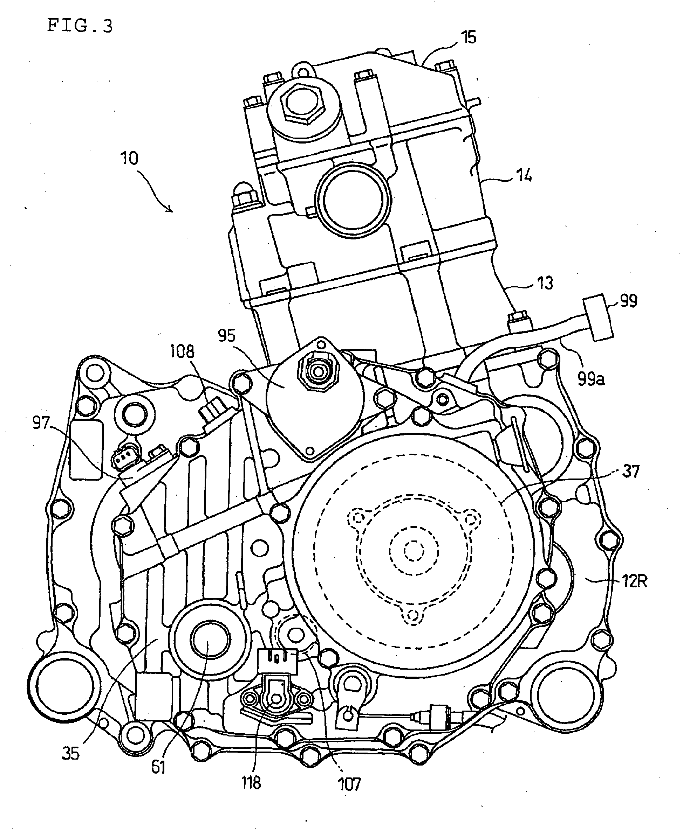

As shown in Fig. 2 which is a front view showing the internal combustion engine 10 and in Fig. 3 which is a rear view showing it, the internal combustion engine 10 is planted in a state in which a cylinder block 13, a cylinder head 14 and a cylinder head cover 15 are sequentially piled on a crankcase 12 and are slightly inclined leftward (rightward in Fig. 2) based upon a traveling direction of the vehicle.

The crankcase 12 also houses the transmission 40 arranged on the left side of the crankshaft 11 inside and has longitudinal structure configured by a front crankcase half 12F and a rear crankcase half 12R respectively divided longitudinally by a plane perpendicular to the crankshaft 11 directed in a longitudinal direction of the body.

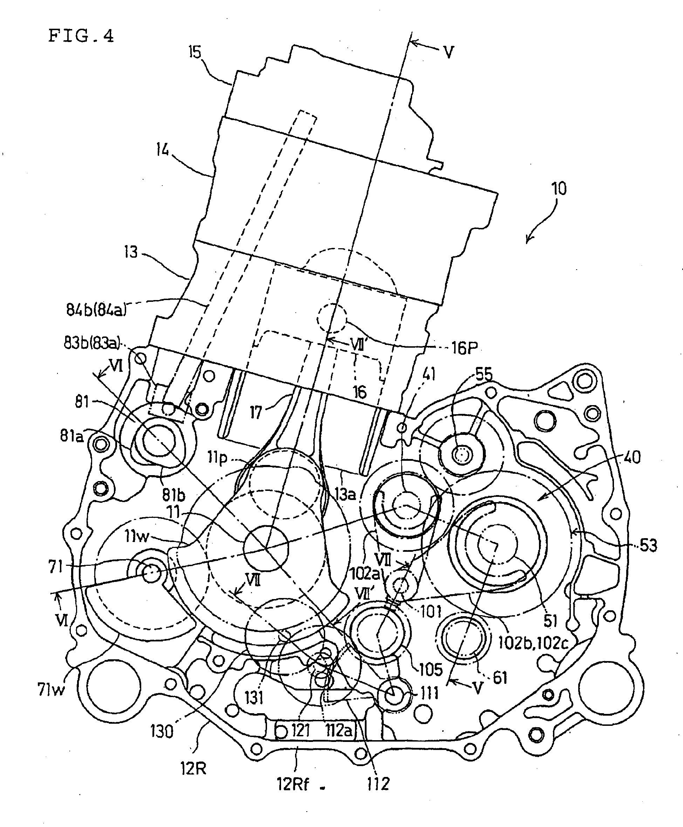

Fig. 4 is a front view in which the front crankcase half 12F of the internal combustion engine 10 and others are omitted and shows a joined face 12Rf of the rear crankcase half 12R.
A cylinder sleeve 13a is fitted to the crankcase 12 from the cylinder block 13 and a piston 16 is fitted into the cylinder sleeve 13a so that the piston can be slid.

A connecting rod 17 couples a crankpin 11p laid between a pair of longitudinal crank webs 11w, 11w of the crankshaft 11 and a piston pin 16p provided to the piston 16.

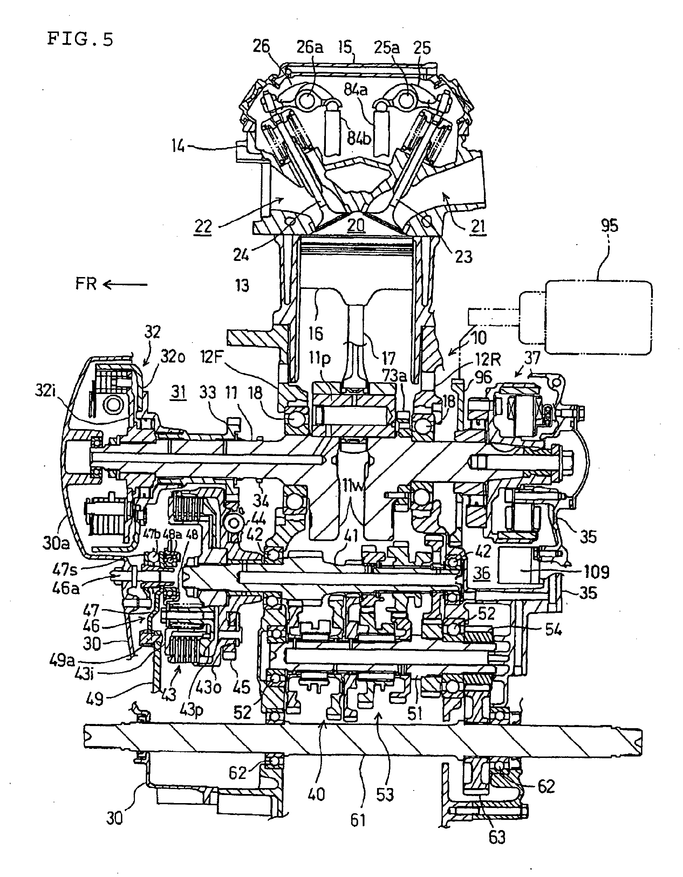

As shown in Fig. 5, a combustion chamber 20 is formed between a top face of the piston 16 and a ceiling of the cylinder head 14 opposite to the piston, an intake port 21 is extended backward from the combustion chamber 20, and an exhaust port 22 is extended forward.

An intake valve 23 opens and closes an opening open to the combustion chamber 20 of the intake port 21 and an exhaust valve 24 opens and closes an opening open to the combustion chamber 20 of the exhaust port 22.
Rocker arms 25, 26 that drive the intake valve 23 and the exhaust valve 24 are provided in the cylinder head cover 15 journaling to rocker arm shafts 25a, 26a.

As shown in Fig. 5, the crankshaft 11 journalled to the front crankcase 12F and the rear crankcase 12R via main bearings 18, 18 in front of and at the back of the crank webs 11w, 11w.
A front cover 30 which is an engine case cover covers the front crankcase half 12F from the front side and is connected to the front crankcase half, and a front housing 31 is formed between the front cover and the front crankcase half 12F.
The front end of the crankshaft 11 extended in the front housing 31 forward from the main bearing 18 held by the front crankcase half 12F is rotatably supported by the front cover 30 via bearings 19.

A starting clutch 32 which is a power transmission control means is provided to the crankshaft 11 in the front housing 31 in the vicinity of the front end of the crankshaft.
The starting clutch 32 is a centrifugal clutch, a clutch inner 32i is fastened to the vicinity of the front end of the crankshaft 11, a clutch outer 32o is supported by a primary driving gear 33 journalled to the crankshaft 11 via a one-way clutch in a state in which relative rotation in only one direction is allowed, and motive power is transmitted from the primary driving gear 33 to the transmission 40.

A driving sprocket 34 forming a transmission mechanism for a valve that rotates a cam shaft 81 described later is formed between the primary driving gear 33 of the crankshaft 11 and the main bearing 18.
The rear of the rear crankcase half 12R is covered with a rear cover 35 which is the engine case cover, a rear housing 36 is formed, and an alternator 37 and others are provided to the crankshaft 11 in the rear housing 36.

A main shaft 41 of the transmission 40 is arranged in parallel with the crankshaft 11 on the left diagonal upside of the crankshaft 11 (see Fig. 4) and is rotatably journalled to the front crankcase 12F and the rear crankcase 12R via bearings 42, 42 (see Fig. 5).
A shift clutch 43 is provided at the front end of the main shaft 41 extended into the front housing 31 forward from the bearing 42 held by the front crankcase half 12F.

The shift clutch 43 is a multiple disc friction clutch, a clutch inner 43i is fastened to the front end of the main shaft 41, a clutch outer 43o is rotatably journalled to the main shaft 41, a pressure plate 43p is interposed between the clutch inner 43i and the clutch outer 43o, the pressure plate 43p presses or releases a pile of plural clutch discs integrally rotated with the clutch outer 430 and plural friction discs integrally rotated with the clutch inner 43i, and the transmission of motive power is controlled.

A clutch operating means 46 that operates the pressure plate 43p is arranged on the front side of the main shaft 41.
As shown in Fig. 5, as for the clutch operating means 46, a variable cam plate lever 47 is journalled to a supporting shaft 46a supported by the front cover 30 in front coaxially with the main shaft 41 so that the variable cam plate lever can be turned and can be axially slid, a ball 47b is interposed between fixing plates 47s fastened to the supporting shaft 46a opposing in front of the variable cam plate lever 47, and when the variable cam plate lever 47 is rocked, the variable cam plate lever 47 is moved backward by reaction force received from the fixing plate 47s via the ball 47b.

A coupling plate 48 connected to the variable cam plate lever 47 via a bearing 48a is coupled to the pressure plate 43p of the shift clutch 43, the pressure plate 43p releases the pile of the friction discs by the backward movement of the variable cam plate lever 47, and the shift clutch 43 is let out.
A clutch arm 49 fastened to a shift spindle 111 described later operates the variable cam plate lever 47 and a roller 49a provided to an end of the clutch arm 49 is fitted into a groove at the end of the variable cam plate lever 47.

As a primary driven gear 45 is provided to the clutch outer 43o via a damper spring 44 and the primary driving gear 33 and the primary driven gear 45 are engaged, the rotational motive power is transmitted to the clutch outer 43o of the shift clutch 43 via the primary driven gear 45 and the damper spring 44 when the starting clutch 33 is let in and the rotation of the crankshaft 11 is transmitted to the primary driving gear 33, and when the shift clutch 43 is let in, the main shaft 41 is rotated together with the clutch inner 43i.

The starting clutch 32 is located in front of the shift clutch 43, is arranged close to the front of the shift clutch 43 so that their clutches are partially overlapped axially (in a front view), the longitudinal length of the crankshaft 11 is possibly shortened, distance between the crankshaft 11 and the main shaft 41 is also reduced, and the internal combustion engine 10 is miniaturized.

A counter shaft 51 is arranged in parallel with the main shaft 41 on the further left side of the main shaft 41 and on the diagonal downside (see Fig. 4) and is rotatably journalled to the front crankcase half 12F and the rear crankcase half 12R via bearings 52, 52 (see Fig. 5).
As shown in Fig. 5, a speed change gear train group 53 which is the assembly of a gear train that sets a level of speed is formed between the main shaft 41 and the counter shaft 51 and gears are selectively engaged between the main shaft 41 and the counter shaft 51 for shift.
A reverse shaft 55 is arranged on the diagonal upside of the main shaft 41.

The output shaft 61 is arranged on the slight right side of the downside of the counter shaft 51 (see Fig. 4) and is rotatably journalled to the front crankcase 12F and the rear crankcase 12R via bearings 62, 62 (see Fig. 5).

A deceleration driving gear 54 is fitted on a rear end protruded into the rear housing 36 backward from a crank chamber of the counter shaft 51, a deceleration driven gear 63 fitted on the output shaft 61 arranged in parallel with the counter shaft 51 is engaged with the deceleration driving gear 54, and decelerated motive power is transmitted to the output shaft 61.
The output shaft 61 is extended longitudinally, pierces the front cover 30 and the rear cover 35, is protruded outside, and as described above, the rotation at longitudinal both ends is respectively used for driving the front wheel FW and the rear wheel RW via the drive shafts 2F, 2R and others.

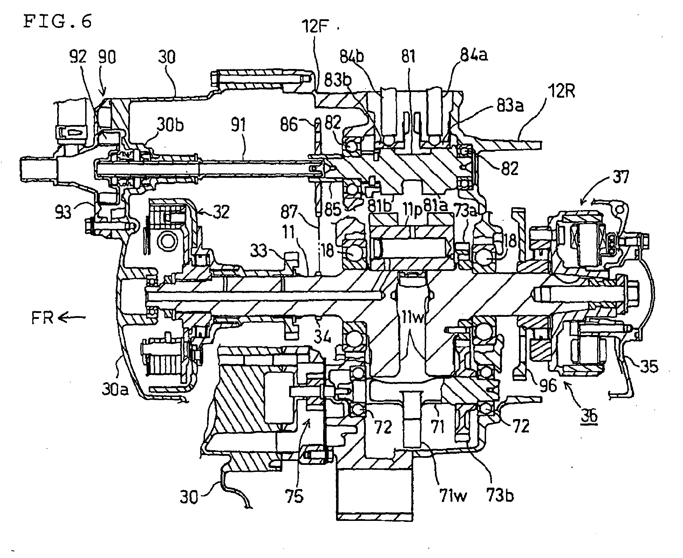

A balance shaft 71 parallel to the crankshaft 11 is located on the slight downside of the right side (the left side in Fig. 4) of the crankshaft 11 and as shown in Fig. 6, both ends of the balance shaft 71 are journalled to the front crankcase 12F and the rear crankcase 12R via bearings 72, 72.

A balance weight 71w formed in the center of the balance shaft 71 is located between the front and rear crank webs 11w, 11w of the crankshaft 11, a driven gear 73b is fitted on the rear of the balance shaft 71, and the driven gear is engaged with a driving gear 73a fitted on the crankshaft 11 (see Fig. 6).
An oil pump 75 is provided in coaxial front of the balance shaft 71.

A camshaft 81 of a valve system parallel to the crankshaft 11 is arranged on the diagonal upside of the right side of the crankshaft 11 (see Fig. 4) and both ends of the camshaft 81 are journalled to the front crankcase 12F and the rear crankcase 12R via bearings 82, 82 (see Fig. 6).

Cam followers 83a, 83b abutting on cam lobes 81a, 81b of the camshaft 81 and vertically slid receive respective lower ends of push rods 84a, 84b that transmit driving force to the rocker arms 25, 26 in the cylinder head cover 15.

As shown in Fig. 6, a coupling sleeve 85 provided with a driven sprocket 86 is fitted to a front end protruded forward from the front crankcase 12F of the camshaft 81, a chain 87 (see a chain double-dashed line shown in Fig. 6) is wound between the driving sprocket 34 formed on the crankshaft 11 and the driven sprocket 86, and the rotation of the crankshaft 11 is transmitted to the camshaft 81 via the chain 87.

A water pump 90 driven coaxially with the camshaft 81 is provided to the front cover 30 in front of the camshaft 81.
As shown in Fig. 6, the water pump 90 forms a water pump body 30b that connects with a clutch cover 30a covering the front of the starting clutch 32 of the front cover 30, a pump driving shaft 91 coupled to the camshaft 81 via the coupling sleeve 85 in front of the camshaft and integrally rotated with the camshaft is fitted into the water pump body 30b from its back, an impeller 92 is fitted to the end protruded forward of the water pump body 30b, and a water pump cover 93 covers the front of the impeller 92.

A starter driven gear 96 is fitted in the rear of the rear housing 36 of the crankshaft 11 in front of the alternator 37 (see Figs. 5, 6 and 7), the rotation of a drive shaft of a starting motor 95 protruded on the upside of the rear face of the rear crankcase 12R is transmitted to the starter driven gear 96 via a speed reducing gear mechanism not shown, and the crankshaft 11 is forcedly rotated for starting.

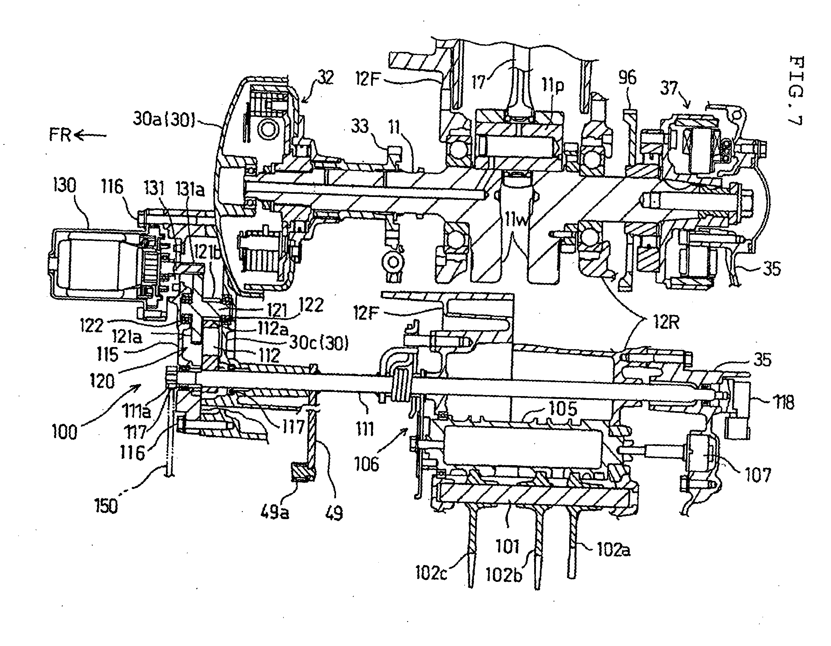

A transmission driving mechanism 100 that drives the transmission 40 is provided on the downside of the crankshaft 11 and the main shaft 41.
As shown in Fig. 4, a guide shaft 101 is arranged substantially under the main shaft 41 in a slightly lower position than the crankshaft 11 in parallel with the main shaft 41 and the counter shaft 51 with both ends of the guide shaft supported by the front crankcase 12F and the rear crankcase 12R (see Fig. 7), and a shift drum 105 is rotatably laid between the front crankcase 12F and the rear crankcase 12R on the further downside of the guide shaft 101.

As shown in Fig. 7, respective shift pins of shift forks 102a, 102b, 102c slidably supported by the guide shaft 101 are fitted into three shift grooves formed on the periphery of the shift drum 105, the shift fork 102a guided into the shift groove by the turning of the shift drum 105 and axially moved moves the gear on the main shaft 41, the shift forks 102b, 102c move the gears on the counter shaft 51, a set of the engaged gears is changed, and shift is made.

The shift spindle 111 which is a shift rotating shaft is arranged next to the left downside of the shift drum 105 and is located in a direction obtuse with a direction of an electric motor 130 for shift arranged on the right side of the shift drum 105 when they are viewed from the shift drum 105 (see Fig. 4).
The shift spindle 111 is located at the lower end of the internal combustion engine 10 next to a lower edge of the crankcase 12.
As shown in Fig. 7, the shift spindle 111 is long longitudinally and pierces the front crankcase 12F, the rear crankcase 12R, further, the front cover 30 and the rear cover 35.

A shift transmission means 106 is interposed between the shift spindle 111 and the shift drum 105 and the turning of the shift spindle 111 turns the shift drum 105 via the shift transmission means 106 by a required angle.
An angle at which the shift drum 105 is turned is sensed by a shift position sensor 107 coaxially provided at the back of the shift drum 105.

The base of the clutch arm 49 is integrally fastened to the shift spindle 111, the clutch arm 49 is integrally rocked by the turning of the shift spindle 111, rocks the variable cam plate lever 47 of the shift clutch 43 via the roller 49a at the end, and as described above, the shift clutch 43 can be let out.

As shown in Fig. 2, a gear case 30c (see Fig. 7) is formed in the front of the front cover 30 from a lower part of the clutch cover 30a covering the front of the starting clutch 32 of the front cover 30 to the shift spindle 111 on the diagonal downside of the left side (the right side in Fig. 2), a speed reducing gear mechanism 120 is arranged in the gear case 30c, and is covered with a gear cover 115 from the front side in the gear case 30c.
The gear cover 115 is fastened to the gear case 30c of the front cover 30 by plural bolts 116.

As shown in Figs. 2 and 7, a right upper half of the gear case 30c is equivalent to the front of the clutch cover 30a of the front cover 30 and the electric motor 130 for the shift is attached to the front of the right upper half of the gear cover 115 covering the front of the gear case 30c from the front side.
A part of bolt 116 out of the bolts 116 also fastens the electric motor 130 for the shift together with the gear cover 115.

A small-diameter driving gear 131a is formed at a rear end of a motor driving shaft 131 protruded backward from the gear cover 115 of the electric motor 130 for the shift.
The shift spindle 111 pierces the front cover 30 and the gear cover 115 via sealing material 117, 117 and a sectorial gear shift arm 112 is fitted onto the shift spindle 111 between the front cover 30 and the gear cover 115.
A sectorial main part of the gear shift arm 112 is fitted onto the shift spindle 111 and a large-diameter gear 112a is formed in a peripheral circular-arc part.

As shown in Fig. 4, an idle gear shaft 121 is journalled to the front cover 30 and the gear cover 115 in a substantial intermediate position of the motor driving shaft 131 of the electric motor for the shift 130 and the shift spindle 111 so that both ends of the idle gear shaft can be rotated via bearings 122, 122 (see Fig. 7).

A large-diameter gear 121a and a small-diameter gear 121b are integrally formed on the idle gear shaft 121 longitudinally.
The large-diameter gear 121a on the front side of the idle gear shaft 121 is engaged with the driving gear 131a of the motor driving shaft 131 and the small-diameter gear 121b on the rear side is engaged with the large-diameter gear 112a of the gear shift arm 112 of the shift spindle 111.

As described above, when the electric motor 130 for the shift is driven and the driving shaft 131 is rotated, the rotational speed of the driving shaft is reduced via the idle gear shaft 121 and the rotational motive power is transmitted to the shift spindle 111.

As the shift spindle 111 is arranged on the downside of the starting clutch 32 provided to the front end of the crankshaft 11 and the electric motor 130 for the shift is protruded in front from the lower part of the front cover 30 covering the front of the starting clutch 32, the electric motor 130 for the shift and the shift spindle 111 are located mutually close, and as described above, motive power can be easily and smoothly transmitted by the simple speed reducing gear mechanism 120 having one idle gear shaft 121.

The rotation of the shift spindle 111 lets out the shift clutch 43 via the clutch arm 49 and the clutch operating unit 46 as described above, simultaneously turns the shift drum 105 by the required angle via the shift transmission means 106, slides the shift forks 102a, 102b, 102c, changes a set of engaged gears of the speed change gear train group 53, and a shift of the transmission 40 is executed.

The speed reducing gear mechanism 120 of the transmission driving mechanism 100 is configured as described above, the idle gear shaft 121 which is a part of the speed reducing gear mechanism 120 and the electric motor 130 for the shift are located in front of the clutch cover 30a, that is, are arranged in positions overlapped with the axial outside of the starting clutch 32.

As shown in Fig. 7, a turning angle sensor 118 is coaxially attached to a rear end that pierces the rear cover 35 of the shift spindle 111, a hexagonal fitting part 111a of the front end that pierces the front cover 30 and the gear cover 115 of the shift spindle 111 is protruded forward, and is exposed outside.

The fitting part 111a protruded outside of the front end of the shift spindle 111 is located in front of the front cover 30 covering the respective fronts of the starting clutch 32 and the shift clutch 43 (see Fig. 7), the shift spindle 111 is turned by fitting an operating part 150a having a hexagonal hole of a wrench 150 which is a turning tool onto the hexagonal fitting part 111a and turning it along the front of the front cover 30, and the shift of the transmission 40 can be executed manually.

As shown in Fig. 1, the opening for access 5a is formed as described above in the front of the side cover 5 of the all terrain vehicle 1 and manual shift work can be executed by inserting the wrench 150 from the opening for access 5a and fitting it to the fitting part 111a of the shift spindle 111 protruded in front of the internal combustion engine 10.

When the electric motor 130 for the shift fails, the all terrain vehicle 1 can be run by setting the speed of the transmission 40 to first gear speed for example manually using the wrench 150 as described above.

As described above, in the transmission driving mechanism 100, the front end of the shift spindle 111 is protruded outside and as a result, the fitting part 111a is merely formed, a special transmission driving mechanism for manual shift is not required, the number of parts is reduced, the structure is simple and is excellent in the ease of assembly, no maintenance is required, and the cost can be reduced.

As shown in Fig. 2, the shift spindle 111 is adjacent to a lower edge of the front cover 30 (substantially a lower edge of the crankcase 12), is located on the downside between the electric motor 130 for the shift protruded in front of the front cover 30 and the output shaft 61, and the wrench 150 the operating part 150a at the lower end of which is fitted onto the fitting part 111a at the front end of the shift spindle 111 is extended upward between the electric motor 130 for the shift and the output shaft 61.

The wrench 150 is rocked sideways along the front of the front cover 30, its lateral turning limit position is shown by a chain double-dashed line in Fig. 2, and a sectorial area inside right and left turning limits is a turning area W.

As shown in Fig. 2, when a plane X including the crankshaft 11 (a central axis of the starting clutch 32) and (a central axis) of the shift spindle 111 is supposed, the electric motor 130 for the shift is arranged on the downside of the plane X, the shift clutch 43 is arranged on the other upside of the plane X, the shift clutch 43 is partially overlapped with the starting clutch 32 in the front view, and is located at the back of the starting clutch 32.

As the turning area W of the wrench 150 is along the front of the front cover 30 covering the respective fronts of the starting clutch 32 and the shift clutch 43 and is overlapped with a part of the front cover 30 on the upside where the shift clutch 43 is arranged of the plane X in the front view, large space in front of the starting clutch 32 and the shift clutch 43 respective having a large diameter can be used for the turning area W of the wrench 150, the wrench 150 is lengthened, the operability can be enhanced, and work is extremely facilitated.

The shift position detector 107 is provided to a rear end of a rotating shaft of the shift drum 105, the turning angle sensor 118 is attached to the rear end of the shift spindle 111, the shift position sensor 107 and the turning angle sensor 118 are arranged in the rear of the body of the internal combustion engine 10, and as shown in Fig. 3, in the rear of the body of the internal combustion engine 10, the alternator 37, the starting motor 95 and further, accessories such as a vehicle speed sensor 97 that senses vehicle speed based upon the rotation of the counter shaft 51 are arranged.

A crankshaft revolution number sensor 109 that senses the number of revolutions of the crankshaft based upon the rotation of the outer of the alternator 37 is attached to the rear cover 35 (see Fig. 3) and an engine speed sensor (not shown) that senses engine speed based upon the rotation of the deceleration driving gear 54 fitted onto the rear end of the counter shaft 51 is attached to the rear cover 35.
Further, a terminal 108 of the shift position sensor 107 is protruded on the right side of the vehicle speed sensor 97, a distribution cord 99a of the alternator is extended from the upside of the alternator 37, and an AC generator terminal 99 is provided to the end.

As these accessories are arranged in the rear of the body of the internal combustion engine 10, space is produced in front of the body of the internal combustion engine 10 and as a result, the turning area W of the wrench 150 can be sufficiently secured.

Besides, as the accessories are concentrated on the rear of the body of the internal combustion engine 10, a signal line and a power line respectively extended from these accessories can be collectively wired.
Further, as the accessories are arranged in the rear of the body of the internal combustion engine 10, the accessories can be protected from a scattering stone and others.

### [Description of Reference Numerals]

- 1: All terrain vehicle,
- 10: Internal combustion engine,
- 11: Crankshaft,
- 12: Crankcase,
- 30: Front cover,
- 32: Starting clutch,
- 37: Alternator,
- 40: Transmission,
- 41: Main shaft,
- 43: Shift clutch,
- 46: Clutch operating means,
- 49: Clutch arm,
- 51: Counter shaft,
- 61: Output shaft,
- 95: Starting motor,
- 100: Transmission driving mechanism,
- 101: Guide shaft,
- 105: Shift drum,
- 107: Shift position sensor,
- 111: Shift spindle,
- 115: Gear cover,
- 118: Turning angle sensor,
- 120: Speed reducing gear mechanism,
- 130: Electric motor for shift,
- 150: Wrench.

## Claims

1. A transmission driving mechanism of an internal combustion engine (10) comprising a transmission that shifts the rotation of a crankshaft (11) and transmits it to an output shaft (61), the transmission driving mechanism (100) rotating a shift rotating shaft by an actuator for a shift to change the speed of the transmission, said internal combustion engine (10) having a body,
wherein one end of the shift rotating s aft pierces an engine case cover and is protruded outside, and
a fitting part onto which a turning tool is fitted is formed at the protruded end of the shift rotating shaft, wherein the turning tool an operating part of which is fitted onto the fitting part at the front end of the shift rotating shaft is turned along the front of the engine case cover, **characterized in that**
the internal combustion engine (10) is mounted in a vehicle with the crankshaft (11) directed in a longitudinal direction of said body, and **in that**
the fitting part is formed at the front end of the shift rotating shaft parallel to the crankshaft (11) and directed in the longitudinal direction of said body.

2. The transmission driving mechanism of the internal combustion engine according to any of the preceding claims,
wherein a turning angle sensing means is provided to a rear end of the shift rotating shaft, and
accessories of the internal combustion engine (10) are arranged mainly in the rear of the body of the internal combustion engine (10).

3. The transmission driving mechanism of the internal combustion engine (10) according to any of the preceding claims,
wherein the shift rotating shaft is arranged on the downside of a starting clutch (32) provided to a front end of the crankshaft (11),
the actuator for the shift is protruded forward in a lower part of the engine case cover covering the front of the starting clutch (32), and
a turning area of the turning tool is overlapped with the starting clutch (32) on the side of the actuator for the shift of the engine case cover in a front view.

4. The transmission driving mechanism of the internal combustion engine (10) according to any of the preceding claims,
wherein the actuator for the shift is arranged on one side partitioned by a plane including the central axis of the starting clutch (32) and the central axis of the shift rotating shaft and a shift clutch (43) is arranged on the other side so that the shift clutch (43) is partially overlapped with the starting clutch (32) at the back of the starting clutch (32) in the front view,
the engine case cover also covers the front of the shift clutch (43) together with the front of the starting clutch, and
the turning area of the turning tool is overlapped with the shift clutch in the front view.

5. The transmission driving mechanism of the internal combustion engine (10) according to any of the preceding claims,
wherein the shift rotating shaft is arranged next to a lower edge of the engine case cover.

## Patentansprüche

1. Übertragungsantriebsmechanismus eines Verbrennungsmotors (10), der ein Getriebe aufweist, das die Drehung einer Kurbelwelle (11) umschaltet und sie an eine Ausgangswelle (61) überträgt, wobei der Übertragungsantriebsmechanismus (100) eine rotierende Schaltwelle durch einen (Gang-) Schaltaktuator dreht, um die Drehzahl des Getriebes zu ändern, wobei der Verbrennungsmotor (10) einen Körper hat,
wobei ein Ende der rotierenden Schaltwelle eine Motorgehäuseabdeckung durchsetzt und nach außen vorsteht, und
ein Passstück, auf dem ein Drehwerkzeug montiert ist, an dem vorstehenden Ende der rotierenden Schaltwelle ausgebildet ist, wobei das Drehwerkzeug, von dem ein Bedienteil auf das Passstück an dem Vorderende der rotierenden Schaltwelle montiert ist, entlang der Vorderseite der Motorgehäuseabdeckung gedreht wird, **dadurch gekennzeichnet, dass**
der Verbrennungsmotor (10) in einem Fahrzeug montiert ist, wobei die Kurbelwelle (11) in einer Längsrichtung des Körpers ausgerichtet ist, und **dadurch** dass
das Passstück an dem Vorderende der rotierenden Schaltwelle parallel zu der Kurbelwelle (11) ausgebildet ist und in der Längsrichtung des Körpers ausgerichtet ist.

2. Übertragungsantriebsmechanismus des Verbrennungsmotors gemäß einem der vorhergehenden Ansprüche,
wobei eine Drehwinkelabtasteinrichtung an einem hinteren Ende der rotierenden Schaltwelle bereitgestellt ist, und
Zubehörteile des Verbrennungsmotors (10) hauptsächlich im Hinterteil des Körpers des Verbrennungsmotors (10) angeordnet sind.

3. Übertragungsantriebsmechanismus des Verbrennungsmotors (10) gemäß einem der vorhergehenden Ansprüche,
wobei die rotierende Schaltwelle auf der Unterseite einer Anlasskupplung (32) angeordnet ist, die an einem Vorderende der Kurbelwelle (11) bereitgestellt ist, der Schaltaktuator in einem unteren Teil der Motorgehäuseabdeckung, welche die Vorderseite der Anlasskupplung (32) bedeckt, nach vorne vorsteht, und ein Drehbereich des Drehwerkzeugs mit der Anlasskupplung (32) auf der Seite des Schaltaktuators der Motorgehäuseabdeckung in einer Vorderansicht überlappt.

4. Übertragungsantriebsmechanismus des Verbrennungsmotors (10) gemäß einem der vorhergehenden Ansprüche,
wobei der Schaltaktuator auf einer Seite angeordnet ist, die durch eine Ebene einschließlich der Mittelachse der Anlasskupplung (23) und der Mittelachse der rotierenden Schaltwelle unterteilt ist, und wobei eine Schaltkupplung (43) auf der anderen Seite angeordnet ist, so dass die Schaltkupplung (43) in der Vorderansicht teilweise mit der Anlasskupplung (32) auf der Rückseite der Anlasskupplung (32) überlappt,
die Motorgehäuseabdeckung auch die Vorderseite der Schaltkupplung (43) zusammen mit der Vorderseite der Anlasskupplung bedeckt, und
der Drehbereich des Drehwerkzeugs in der Vorderansicht mit der Schaltkupplung überlappt.

5. Übertragungsantriebsmechanismus des Verbrennungsmotors (10) gemäß einem der vorhergehenden Ansprüche,
wobei die rotierende Schaltwelle nahe einem unteren Rand der Motorgehäuseabdeckung angeordnet ist.

## Revendications

1. Mécanisme d'entraînement de transmission d'un moteur à combustion interne (10) comprenant une transmission qui change la vitesse de la rotation d'un vilebrequin (11) et la transmet à un arbre de sortie (61), le mécanisme d'entraînement de transmission (100) faisant tourner un arbre de rotation de changement de vitesse par un actionneur pour un changement de vitesse afin de changer la vitesse de la transmission ledit moteur à combustion interne (10) ayant un corps,
dans lequel une extrémité de l'arbre de rotation de changement de vitesse perce un couvercle de carter de moteur et fait saillie vers l'extérieur, et
une partie d'ajustement sur laquelle un outil tournant est ajusté, est formée au niveau de l'extrémité en saillie de l'arbre de rotation de changement de vitesse, dans lequel l'outil tournant dont une partie de commande est ajustée sur la partie d'ajustement au niveau de l'extrémité avant de l'arbre de rotation de changement de vitesse tourne le long de l'avant du couvercle de carter de moteur, **caractérisé en ce que :**
le moteur à combustion interne (10) est monté dans un véhicule avec le vilebrequin (11) dirigé dans une direction longitudinale dudit corps, et **en ce que** :
la partie d'ajustement est formée au niveau de l'extrémité avant de l'arbre de rotation de changement de vitesse parallèle au vilebrequin (11) et dirigée dans la direction longitudinale dudit corps.

2. Mécanisme d'entraînement de transmission du moteur à combustion interne selon l'une quelconque des revendications précédentes,
dans lequel on prévoit des moyens de détection d'angle de rotation sur une extrémité arrière de l'arbre de rotation de changement de vitesse, et
des accessoires du moteur à combustion interne (10) sont agencés principalement à l'arrière du corps du moteur à combustion interne (10).

3. Mécanisme d'entraînement de transmission du moteur à combustion interne (10) selon l'une quelconque des revendications précédentes,
dans lequel l'arbre de rotation de changement de vitesse est agencé au-dessous d'un embrayage de démarrage (32) prévu sur une extrémité avant du vilebrequin (11),
l'actionneur pour le changement de vitesse fait saillie vers l'avant dans une partie inférieure du couvercle de carter de moteur recouvrant l'avant de l'embrayage de démarrage (32), et
une surface de rotation de l'outil tournant est chevauchée, avec l'embrayage de démarrage (32) du côté de l'actionneur pour le changement de vitesse du couvercle de carter de moteur sur une vue de face.

4. Mécanisme d'entraînement de transmission du moteur à combustion interne (10) selon l'une quelconque des revendications précédentes,
dans lequel l'actionneur pour le changement de vitesse est agencé sur un côté divisé par un plan comprenant l'axe central de l'embrayage de démarrage (32) et l'axe central de l'arbre de rotation de changement de vitesse et un embrayage de changement de vitesse (43) est agencé de l'autre côté de sorte que l'embrayage de changement de vitesse (43) est partiellement chevauché avec l'embrayage de démarrage (32) à l'arrière de l'embrayage de démarrage (32) sur la vue de face,
le couvercle de carter de moteur recouvre également l'avant de l'embrayage de changement de vitesse (43) conjointement à l'avant de l'embrayage de démarrage, et
la surface de rotation de l'outil tournant est chevauchée avec l'embrayage de changement de vitesse sur la vue de face.

5. Mécanisme d'entraînement de transmission du moteur à combustion interne (10) selon l'une quelconque des revendications précédentes, dans lequel l'arbre de rotation de changement de vitesse est agencé à côté d'un bord inférieur du couvercle de carter de moteur.
